# EUROPÄISCHE PATENTSCHRIFT

(11) **EP 1 585 913 B1**
(45) Veröffentlichungstag und Bekanntmachung des Hinweises auf die Patenterteilung: **28.02.2007**
(21) Anmeldenummer: 04702655.4
(22) Anmeldetag: 16.01.2004
(51) Int. Cl.: F16H 57/04

(54) **HYDRAULIKSYSTEM EINES GETRIEBES MIT EINER ANFAHRKUPPLUNG**
HYDRAULIC SYSTEM FOR A GEARBOX COMPRISING A STARTING CLUTCH
SYSTEME HYDRAULIQUE D'UNE BOITE DE VITESSES A EMBRAYAGE PRINCIPAL

(30) Priorität: 21.01.2003 EP 10302016
(43) Veröffentlichungstag der Anmeldung: 19.10.2005
(73) Patentinhaber: ZF FRIEDRICHSHAFEN Aktiengesellschaft, 88038 Friedrichshafen (DE)
(72) Erfinder: SCHMIDT, Thilo, 88074 Meckenbeuren (DE); GIERER, Georg, 88079 Kressbronn (DE); SCHIELE, Peter, 88079 Kressbronn (DE)
(86) Internationale Anmeldenummer: PCT/EP2004/000297
(87) Internationale Veröffentlichungsnummer: WO 2004/065157

(56) Entgegenhaltungen:
- DE-A- 19 848 935
- DE-A- 19 902 408
- DE-C- 10 044 177
- US-A- 5 058 716
- US-B1- 6 428 445

## Beschreibung

Die Erfindung betrifft ein Hydrauliksystem eines Getriebes mit einer Anfahrkupplung gemäß der im Oberbegriff des Patentanspruches 1 näher definierten Art.

Die DE 100 44 177 zeigt ein Hydrauliksystem eines Getriebes gemäß den Oberbegriff des Anspruchs 1.

In Antriebssträngen von Kraftfahrzeugen werden üblicherweise Anfahrkupplungen oder hydrodynamische Drehmomentwandler als Anfahrelement verwendet. Insbesondere beim Einsatz eines hydrodynamischen Drehmomentwandlers ist ein Schmier-Kühlkonzept eines Automatgetriebes derart ausgelegt, daß der hydrodynamische Drehmomentwandler und auch ein Schmierölkreislauf über einen Sekundärkreislauf eines Hydrauliksystems des Getriebes von einer Hydraulikpumpe versorgt wird. Schaltelemente, welche zum Einstellen einer Übersetzung in dem Getriebe vorgesehen sind, sowie Vorsteuerelemente des Getriebes werden über einen Primärkreislauf von der Hydraulikpumpe mit Hydraulikfluid versorgt.

Eine Priorisierung zwischen dem Primärkreislauf und dem Sekundärkreislauf wird über ein sogenanntes Hauptdruckventil bzw. ein Systemdruckventil, welches zwischen der Hydraulikpumpe und dem Primärkreislauf bzw. dem Sekundärkreislauf angeordnet ist und den von der Hydraulikpumpe geförderten Volumenstrom des Hydraulikfluids bedarfsgerecht auf die beiden Kreisläufe verteilt, durchgeführt.

Das dem Sekundärkreislauf über das Hauptdruckventil zugeführte Hydraulikfluid wird zunächst dem hydrodynamischen Drehmomentwandler zugeführt. Anschließend durchströmt das Hydraulikfluid zum Abkühlen einen Ölkühler und wird danach anschließend zur Schmierung des Getriebes verwendet.

Wird anstatt eines hydrodynamischen Drehmomentwandlers eine reibschlüssige Kupplung als Anfahrelement verwendet, wird der zur Kühlung erforderliche Volumenstrom des Hydraulikfluids nach dem Durchströmen der Anfahrkupplung in das Hydraulikfluidreservoir zurückgeführt und kann somit nicht mehr zur Schmierung des Getriebes verwendet werden. Daher kommt es bei geringeren Förderleistungen der Hydraulikpumpe unter Umständen zu einer Unterversorgung der Schmierung des Getriebes.

Des weiteren sind aus der Praxis bekannte Hydrauliksysteme, über die eine Kühlung der Anfahrkupplung, ein Kühler für das Hydraulikfluid und eine Schmiermittelversorgung des Getriebes mit Hydraulikfluid beaufschlagt werden, derart ausgeführt, daß zur Begrenzung eines Volumenstromes durch den Ölkühler eine Abzweigleitung vorgesehen ist, über die gegebenenfalls überschüssiges Hydraulikfluid in ein Hydraulikfluidreservoir abgeführt wird. Die Begrenzung des Volumenstromes durch den Ölkühler ist zur Vermeidung von Beschädigungen des Kühlers aufgrund von unzulässig hohen Drücken vorgesehen.

Dabei ist jedoch von Nachteil, daß der zur Vermeidung von Überdrücken in dem Kühler in das Hydraulikfluidreservoir abgeführte Volumenstrom weder der Kühlung der Anfahrkupplung noch der Schmiermittelversorgung zugeführt wird, so daß besonders bei niedrigen Förderleistungen der Hydraulikpumpe diese beiden Bereiche des Sekundärkreislaufes nicht mit der erforderlichen Menge an Hydraulikfluid versorgt werden.

Aufgabe der vorliegenden Erfindung ist es, ein Hydrauliksystem eines Getriebes mit einer Anfahrkupplung zur Verfügung zu stellen, mit welchem ein unzulässig hoher Druck in einem Kühler für ein Hydraulikfluid vermieden wird und gleichzeitig eine Versorgung einer Kühlung einer Anfahrkupplung und einer Schmiermittelversorgung des Getriebes auch bei geringen Förderleistungen der Hydraulikpumpe mit Hydraulikfluid gewährleistet ist.

Erfindungsgemäß wird diese Aufgabe mit einem Hydrauliksystem gemäß den Merkmalen des Patentanspruches 1 gelöst.

Mit dem erfindungsgemäßen Hydrauliksystem eines Getriebes mit einer Anfahrkupplung, bei der ein Volumenstrom des Hydraulikfluids durch den Kühler mittels einer steuerbaren Bypassleitung begrenzbar ist, die nach dem Kühler und vor der Kühlung der Anfahrkupplung sowie vor der Schmiermittelversorgung in den Sekundärkreislauf mündet, ist vorteilhafterweise ein Druck in dem Kühler des Hydraulikfluids auf einen maximalen Wert begrenzbar. Andererseits wird in bezug auf den zulässigen Druck des Kühlers überschüssiges Hydraulikfluid auf einfache Art und Weise in dem Sekundärkreislauf belassen und der Kühlung der Anfahrkupplung sowie der Schmiermittelversorgung zugeführt. Damit wird eine Unterversorgung der beiden letztgenannten Bereiche des Hydrauliksystems auch bei geringen Förderleistungen einer Hydraulikpumpe vermieden.

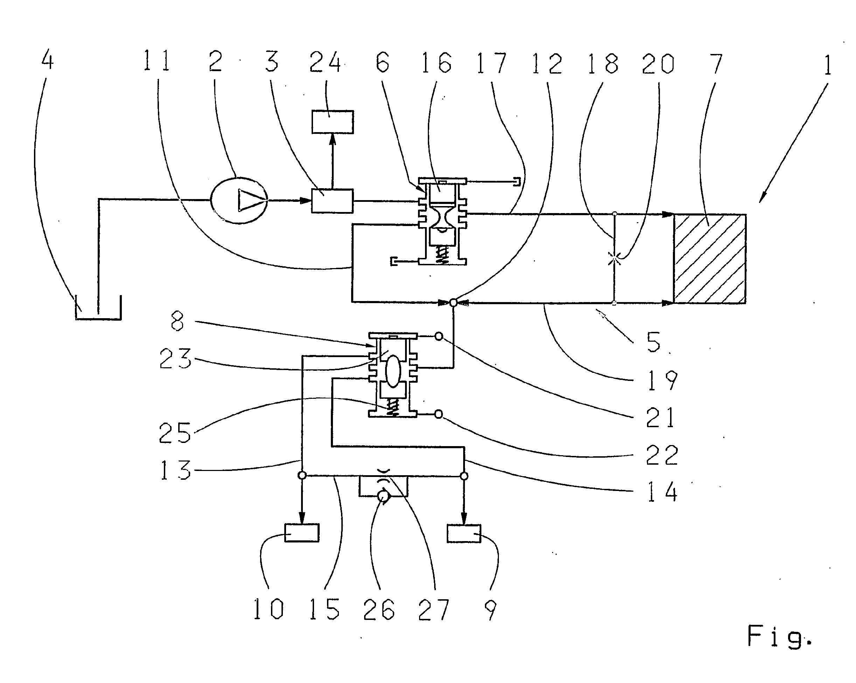

Weitere Vorteile und vorteilhafte Ausgestaltungen des Gegenstandes nach der Erfindung ergeben sich aus den Patentansprüchen und dem unter Bezugnahme auf die Zeichnung prinzipmäßig beschriebenen Ausführungsbeispiel.

Die einzige Figur der Zeichnung zeigt ein Schema eines Hydrauliksystems eines Getriebes mit einer Anfahrkupplung, das mit einem kombinierten Druckbegrenzungs- und Druckreduzierventil sowie mit einem einem Kühler nachgeschalteten Verteilerventil ausgeführt ist.

Bezug nehmend auf die Figur ist ein Schema eines Hydrauliksystems 1 ersichtlich, welches über eine Hydraulikpumpe 2 mit Hydraulikfluid beaufschlagbar ist. Der Hydraulikpumpe 2 ist ein Hauptdruckventil 3 nachgeschaltet, welches aus einem Hydraulikfluidreservoir 4 gefördertes Hydraulikfluid gemäß einer vorgegebenen Priorisierung auf einen schematisiert dargestellten Primärkreislauf 24, über den die Ansteuerung der Schaltelemente erfolgt, und einen Sekundärkreislauf 5 des Hydrauliksystems 1 verteilt.

Der Sekundärkreislauf 5 umfaßt vorliegend ein kombiniertes Druckbegrenzungs- und Druckreduzierventil 6, einen Kühler 7 zum Kühlen des aus dem Hydraulikfluidreservoir 4 geförderten Hydraulikfluids, ein Verteilerventil 8, eine Kühlung 9 für eine nicht näher dargestellte Anfahrkupplung und eine Schmiermittelversorgung 10 für das nicht weiter dargestellte Getriebe.

Das kombinierte Druckbegrenzungs- und Druckreduzierventil 6 wird von der Hydraulikpumpe 2 und dem Hauptdruckventil 3 mit einem sogenannten sekundären Systemdruck beaufschlagt, wobei über das kombinierte Druckbegrenzungs- und Druckreduzierventil 6 eine Versorgung des Kühlers 7 mit Hydraulikfluid priorisiert ist. Somit ist gewährleistet, daß bei geringen Fördermengen der Hydraulikpumpe 2 der über das Hauptdruckventil 3 in den Sekundärkreislauf 5 eingespeiste Volumenstrom des Hydraulikfluids über das kombinierte Druckbegrenzungs- und Druckreduzierventil 6 zunächst in Richtung des Kühlers 7 geleitet und erst von dort zu dem Verteilerventil 8 geführt wird.

Stellt sich an dem kombinierten Druckbegrenzungs- und Druckreduzierventil, nachfolgend vereinfacht als Ventil 6 bezeichnet, ein Staudruck des Kühlers 7 ein, der aus dessen Strömungswiderstand resultiert und einen vorgegebenen Druckwert übersteigt, wird über das Ventil 6 eine Bypassleitung 11 geöffnet und zur Vermeidung von unzulässig hohen Drücken in dem Kühler 7 ein bestimmter Anteil des Volumenstromes des Hydraulikfluids in Richtung eines Summierpunktes 12 geführt.

Bei einer Sättigung des Sekundärkreislaufes 5 stellt sich das Ventil 6 aufgrund der Flächenverhältnisse an einem Schieber 16 des Ventiles 6 von einer druckbegrenzenden Steuerkante auf eine druckreduzierende Steuerkante um, so daß ein Überdruck in dem Kühler 7 bzw. ein diesen durchströmender Volumenstrom sowie insgesamt ein Druck in dem Sekundärkreislauf 5 auf einen maximalen, als Sättigungsdruck bezeichneten Druckwert begrenzt wird.

Die beiden jeweils über den Kühler 7 und die Bypassleitung 11 geführten Volumenströme des Hydraulikfluids werden an dem Summierungspunkt 12 des Sekundärkreislaufes 5 zusammengeführt und gemeinsam dem Verteilerventil 8 zugeführt. Von dort aus wird der aufsummierte Volumenstrom des Hydraulikfluids der Kühlung 9 zu der Anfahrkupplung oder der Schmiermittelversorgung 10 geführt. Zwischen einer zwischen dem Verteilerventil 8 und der Schmiermittelversorgung 10 des Getriebes verlaufenden Zuführleitung 13 und einer weiteren Zuführleitung 14, welche zwischen dem Verteilerventil 8 und der Kühlung 9 der Anfahrkupplung verläuft, ist ein Bypasskanal 15 vorgesehen, über den ein Austausch von Hydraulikfluid zwischen der Zuführleitung 13 und der weiteren Zuführleitung 14 möglich ist.

Um das Hydraulikfluid bei niedrigen Umgebungstemperaturen des Getriebes und kurz nach einer Inbetriebnahme des Getriebes schneller auf Betriebstemperatur führen zu können, zweigt von einer Zuführleitung 17, welche zwischen dem Ventil 6 und dem Kühler 7 verläuft, eine weitere Bypassleitung 18 ab, die in eine zwischen dem Kühler 7 und dem Summierungspunkt 12 verlaufende Hydraulikleitung 19 des Sekundärkreislaufes 5 mündet. Die weitere Bypassleitung 18 ist vorliegend mit einer Thermoblende 20 ausgeführt, deren hydraulischer Querschnitt in Abhängigkeit der Temperatur des Hydraulikfluids variiert. Somit kann der Volumenstrom des Hydraulikfluids durch den Kühler 7 an die thermischen Anforderungen des Getriebes angepaßt werden.

Alternativ hierzu kann es selbstverständlich auch vorgesehen sein, daß in der Zuführleitung 17 zwischen dem Ventil 6 und dem Kühler 7 eine Thermoblende angeordnet ist und über die Thermoblende an dem Ventil 6 ein Staudruck des Kühlers 7 simuliert wird, der bei niedrigen Temperaturen des Getriebes bzw. des Hydraulikfluids eine Öffnung der Bypassleitung 11 über das Ventil 6 bewirkt. Auf diese Weise wird der Kühler 7 bereits vor seinem maximal zulässigen Staudruck umgangen, und es wird auch eine schnellere Erwärmung des Hydraulikfluids erreicht.

Die temperaturabhängige Volumenstromsteuerung des Hydraulikfluids durch den Kühler insbesondere bei niedrigen Temperaturen des Hydraulikfluids führt zu einem schnellen Erreichen einer gewünschten Betriebstemperatur, bei der das Hydraulikfluid eine geringere Viskosität aufweist. Dadurch treten im Hydrauliksystem 1 geringere Druckverluste auf, und es wird eine verbesserte Schmierung des Getriebes erreicht.

Die Verteilung des dem Verteilerventil 8 zugeführten Volumenstromes des Hydraulikfluids zwischen der Kühlung 9 der Anfahrkupplung und der Schmiermittelversorgung 10 des Getriebes erfolgt über zwei Steuerleitungen 21 und 22, über die das Verteilerventil 8 ansteuerbar ist. Dabei liegt über die Steuerleitung 21 ein Steuerdrucksignal an, wenn eine Anforderung für einen Anfahrvorgang vorliegt, bei dem die als reibschlüssiges Schaltelement ausgeführte Anfahrkupplung mit einer Schlupfphase geschlossen wird.

In diesem Zustand des Hydrauliksystems 1 wird das Verteilerventil 8 über die Steuerleitung 21 derart angesteuert, daß der dem Verteilerventil 8 zugeführte Volumenstrom des Hydraulikfluids zu der Kühlung 9 der Anfahrkupplung geführt wird. Damit ist gewährleistet, daß die Kühlung 9 der Anfahrkupplung selbst bei geringen Förderleistungen der Hydraulikpumpe 2 mit Hydraulikfluid versorgt wird, wohingegen eine Versorgung der Schmiermittelversorgung 10 des Getriebes mit Hydraulikfluid ausgehend von der weiteren Zuführleitung 14 mit niedrigerer Priorität über den Bypasskanal 15 erfolgt.

Ist der Anfahrvorgang im wesentlichen beendet und die Anfahrkupplung geschlossen, dann ist die in der Anfahrkupplung auftretende Verlustleistung und damit auch die Verlustleistung in dem Getriebe derart gering, daß der Volumenstrom des Hydraulikfluids von dem Verteilerventil 8 in Richtung der Schmiermittelversorgung 10 des Getriebes geführt wird.

In diesem Betriebszustand der Anfahrkupplung ist ein Ansteuerdruck der Anfahrkupplung, welcher über die Steuerleitung 22 auch an dem Verteilerventil 8 anliegt, derart hoch, daß das Verteilerventil 8 entgegen dem Steuerdrucksignal der Steuerleitung 21 umgestellt wird. Damit wird der dem Verteilerventil 8 zugeführte Volumenstrom des Hydraulikfluids über die Zuführleitung 13 zu der Schmiermittelversorgung 10 des Getriebes geführt, und die Kühlung 9 der Anfahrkupplung wird über den Bypasskanal 15 mit Hydraulikfluid beaufschlagt.

Der Bypasskanal 15 ist mit einer Rückschlagventileinrichtung 26 ausgebildet, welche parallel zu einer Drosseleinrichtung 27 des Bypasskanals 15 geschaltet ist. Bei negativem Druckgefälle zwischen der Schmiermittelversorgung 10 und der Kühlung 9 der Anfahrkupplung ist Hydraulikfluid von der Kühlung 9 der Anfahrkupplung über die Rückschlagventileinrichtung 26 zu der Schmiermittelversorgung 10 führbar, da hier ein größerer hydraulischer Querschnitt zur Verfügung steht, um die Schmiermittelversorgung ausreichend mit Hydraulikfluid zu versorgen. Da in der entgegengesetzten Richtung kein Hydraulikfluid über die kombinierte Drossel- und Rückschlagventileinrichtung 26 führbar ist, erfolgt ein Austausch zwischen der Zuführleitung 13 und der Zuführleitung 14 über eine Drosseleinrichtung 27 des Bypasskanals 15, die einen kleineren hydraulischen Querschnitt aufweist.

Durch den erheblich geringeren Volumenbedarf der Kühlung 9 der Anfahrkupplung nach der Beendigung des Anfahrvorganges kann vorteilhafterweise ebenfalls der Durchfluß im Kühler 7 reduziert werden, womit auch eine Anpassung an eine geringere Verlustleistung des Getriebes möglich ist. Der nunmehr der Schmiermittelversorgung 10 zugeführte Volumenstrom des Hydraulikfluids wird bei höheren Fahrzeuggeschwindigkeiten insbesondere zur Schmierung eines Radsatzes sowie weiterer reibschlüssiger Schaltelemente des Getriebes verwendet.

Der Schaltpunkt des Verteilerventiles 8 ist vorliegend von einem Ansteuerdruck eines Schaltelementes des Getriebes, welches idealerweise zur Darstellung eines Neutralzustandes des Getriebes und der ersten Gangstufe des Getriebes zugeschaltet ist, von dem Ansteuerdruck der Anfahrkupplung und einer auf einen Schieber 23 einwirkenden Feder 25 abhängig. Diese Ausgestaltung und die damit zusammenwirkende Ansteuerung des Verteilerventiles 8 ermöglicht eine Einstellung des Umschaltpunktes in Abhängigkeit einer an der Anfahrkupplung anliegenden Last sowie deren Differenzdrehzahl, womit eine äußerst bedarfsgerechte Führung des Hydraulikfluids in dem Sekundärkreislauf 5 erreicht wird.

Mit dem vorbeschriebenen Hydrauliksystem und der damit verbundenen Ansteuerung des Ventiles 6 und des Verteilerventiles 8 wird im Vergleich zu aus der Praxis bekannten Hydrauliksystemen von Getrieben eine wesentlich effektivere Nutzung eines über eine Hydraulikpumpe geförderten Volumenstromes erreicht. Dies führt vorteilhafterweise zu einer Verbesserung des Getriebewirkungsgrades. Zusätzlich besteht aufgrund der erzielten Optimierung bei der Nutzung der Pumpenleistung die Möglichkeit, eine kleinere Hydraulikpumpe als bei aus der Praxis bekannten Systemen einzusetzen.

Abweichend von der in der Figur dargestellten Ausführung des Hydrauliksystems 1 kann es zur Vermeidung von unzulässig hohen Druckwerten in dem Kühler 7 vorgesehen sein, daß bei einer vereinfachten Ausführung des Hydrauliksystems anstatt des Ventiles 6 ein Rückschlagventil zur Ansteuerung der Bypassleitung 11 verwendet wird. Dabei ist zu berücksichtigen, daß ein Rückschlagventil möglicherweise ausreichend, aber nicht optimal ist, um Druckspitzen in dem Sekundärkreislauf zu vermeiden, da Rückschlagventile im Vergleich zu dem kombinierten Druckbegrenzungs- und Druckreduzierventil nicht in gleichem Maße in der Lage sind, Drucküberhöhungen über die Bypassleitung 11 schnell genug abzubauen.

### Bezugszeichen

- 1: Hydrauliksystem
- 2: Hydraulikpumpe
- 3: Hauptdruckventil
- 4: Hydraulikfluidreservoir
- 5: Sekundärkreislauf
- 6: Druckbegrenzungs- und Druckreduzierventil, Ventil
- 7: Kühler
- 8: Verteilerventil
- 9: Kühlung der Anfahrkupplung
- 10: Schmieimittelversorgung des Getriebes
- 11: Bypassleitung
- 12: Summierungspunkt
- 13: Zuführleitung
- 14: weitere Zuführleitung
- 15: Bypasskanal
- 16: Schieber
- 17: Zuführleitung
- 18: weitere Bypassleitung
- 19: Hydraulikleitung
- 20: Thermoblende
- 21: Steuerleitung
- 22: Steuerleitung
- 23: Schieber des Verteilerventiles
- 24: Primärkreislauf
- 25: Feder
- 26: Rückschlagventileinrichtung
- 27: Drosseleinrichtung

## Patentansprüche

1. Hydrauliksystem (1) eines Getriebes mit einer Anfahrkupplung, welches mit einem Primärkreislauf (24) und mit einem Sekundärkreislauf (5) ausgeführt ist, wobei eine Kühlung (9) der Anfahrkupplung, ein Kühler (7) für ein Hydraulikfluid und eine Schmiermittelversorgung (10) des Getriebes in den Sekundärkreislauf (5) integriert sind, und wobei der Kühler (7) der Kühlung (9) der Anfahrkupplung vorgeschaltet ist, **dadurch gekennzeichnet, daß** ein Volumenstrom des Hydraulikfluids durch den Kühler (7) mittels einer steuerbaren Bypassleitung (11) begrenzbar ist, die nach dem Kühler (7) und vor der Kühlung (9) der Anfahrkupplung in den Sekundärkreislauf (5) mündet.

2. Hydrauliksystem nach Anspruch 1, **dadurch gekennzeichnet, daß** die Bypassleitung (11) über ein dem Kühler (7) vorgeschaltetes kombiniertes Druckbegrenzungs- und Druckreduzierventil (6) ansteuerbar ist.

3. Hydrauliksystem nach Anspruch 2, **dadurch gekennzeichnet, daß** der Volumenstrom des Hydraulikfluids durch den Kühler (7) und ein über die Bypassleitung (11) geführter Volumenstrom des Hydraulikfluids vor einem dem Kühler (7) nachgeschalteten Verteilerventil (8) summiert werden.

4. Hydrauliksystem nach Anspruch 3, **dadurch gekennzeichnet, daß** der summierte Volumenstrom des Hydraulikfluids mittels des Verteilerventiles (8) auf die Kühlung (9) der Anfahrkupplung und die Schmiermittelversorgung (10) des Getriebes verteilbar ist.

5. Hydrauliksystem nach einem der Ansprüche 1 bis 4, **dadurch gekennzeichnet, daß** das kombinierte Druckbegrenzungs- und Druckreduzierventil (6) derart ausgebildet ist, daß es bei Sättigung des Sekundärkreislaufes (5) mit Hydraulikfluid als Druckreduzierventil und ansonsten als Druckbegrenzungsventil arbeitet.

6. Hydrauliksystem nach einem der Ansprüche 2 bis 5, **dadurch gekennzeichnet, daß** eine Verteilung des Volumenstromes des Hydraulikfluids des Sekundärkreislaufes (5) bis zum Erreichen eines vorgebbaren Druckwertes im Kühler (7) über das kombinierte Druckbegrenzungs- und Druckreduzierventil (6) in Richtung des Kühlers (7) erfolgt und bei Erreichen des Druckwertes ein Teil des Volumenstromes des Hydraulikfluids ausgehend von dem kombinierten Druckbegrenzungs- und Druckreduzierventil (6) über die Bypassleitung (11) an dem Kühler (7) vorbei führbar ist.

7. Hydrauliksystem nach einem der Ansprüche 3 bis 6, **dadurch gekennzeichnet, daß** das Verteilerventil (8) derart ansteuerbar ist, daß der summierte Volumenstrom des Hydraulikfluids bei einem Anfahrvorgang des Getriebes nach dem Verteilerventil (8) im wesentlichen der Kühlung (9) der Anfahrkupplung zuführbar ist.

8. Hydrauliksystem nach Anspruch 7, **dadurch gekennzeichnet, daß** die Schmiermittelversorgung (10) über einen zwischen der Kühlung (9) der Anfahrkupplung und dem Verteilerventil (8) abzweigenden Bypasskanal (15) mit Hydraulikfluid beaufschlagbar ist.

9. Hydrauliksystem nach Anspruch 8, **dadurch gekennzeichnet, daß** der Bypasskanal (15) mit einer Drosseleinrichtung (27) und einer Rückschlagventileinrichtung (26) ausgeführt ist, wobei bei negativem Druckgefälle zwischen der Schmiermittelversorgung (10) und der Kühlung (9) der Anfahrkupplung Hydraulikfluid von der Kühlung (9) der Anfahrkupplung über die Rückschlagventileinrichtung (26) zu der Schmiermittelversorgung (10) führbar ist.

10. Hydrauliksystem nach einem der Ansprüche 3 bis 9, **dadurch gekennzeichnet, daß** der summierte Volumenstrom des Hydraulikfluids bei geschlossener Anfahrkupplung über das Verteilerventil (8) der Schmiermittelversorgung (10) zuführbar ist, wobei die Kühlung (9) der Anfahrkupplung über den Bypasskanal (15) mit Hydraulikfluid beaufschlagbar ist.

11. Hydrauliksystem nach einem der Ansprüche 3 bis 10, **dadurch gekennzeichnet, daß** eine Ansteuerung des Verteilerventiles (8) in Abhängigkeit eines Ansteuerdrucks der Anfahrkupplung, einer Feder (25) des Verteilerventiles (8) und eines Ansteuerdrucks eines Schaltelementes des Getriebes, welches vorzugsweise zur Darstellung einer Anfahrübersetzung des Getriebes zugeschaltet ist, erfolgt.

12. Hydrauliksystem nach einem der Ansprüche 1 bis 11, **dadurch gekennzeichnet, daß** im Zulauf zum Kühler (7) eine weitere Bypassleitung (18) zum Kurzschließen des Kühlers (7) vorgesehen ist, in die eine Thermoblende (20) integriert ist, deren hydraulischer Querschnitt in Abhängigkeit der Temperatur des Hydraulikfluids variierbar ist.

## Claims

1. The invention relates to a hydraulic system (1) of a transmission with a starting clutch, with said system featuring a primary circuit (24) and a secondary circuit (5), with a cooling device (9) of the starting dutch, a cooler (7) for a hydraulic fluid and a lubricant supply system (10) for the transmission being integrated into the secondary circuit (5), and with the cooler (7) preceding the cooling device (9) of the starting clutch, **characterized in that** the volumetric flow of the hydraulic fluid through the cooler (7) can be limited by means of a controllable bypass line (11), which leads into the secondary circuit (5) after the cooler (7) and before the cooling device (9) of the starting clutch.

2. A hydraulic system according to claim 1, **characterized in that** the bypass line (11) can be controlled via a combined pressure-limiting and pressure-reducing valve (6) preceding the cooler (7).

3. A hydraulic system according to daim 2, **characterized in that** the volumetric flow of the hydraulic fluid through the cooler (7) and the volumetric flow of the hydraulic fluid through the bypass line (11) combine before a distributing valve (8) arranged after the cooler (7).

4. A hydraulic system according to claim 3, **characterized in that** the combined volumetric flow of the hydraulic fluid can be distributed via the distributing valve (8) to the cooling device (9) of the starting clutch and the lubricant supply system (10) of the transmission.

5. A hydraulic system according to one of the claims 1 through 4, **characterized in that** the combined pressure-limiting and pressure-reducing valve (6) is designed in such a manner that when the secondary circuit (5) is saturated with hydraulic fluid it will function as a pressure-reducing valve and otherwise as a pressure-limiting valve.

6. A hydraulic system according to one of the claims 2 through 5, **characterized in that** distribution of the volumetric flow of the hydraulic fluid of the secondary circuit (5) until a presettable pressure value is reached in the cooler (7) takes place towards the cooler (7) via the combined pressure-limiting and pressure-reducing valve (6), and that when the pressure value is reached, some of the volumetric flow of the hydraulic fluid emerging from the combined pressure-limiting and pressure-reducing valve (6) can be directed past the cooler (7) via the bypass line (11).

7. A hydraulic system according to one of the claims 3 through 6, **characterized in that** the distributing valve (8) can be controlled in such a manner that the bulk of the combined volumetric flow of the hydraulic fluid during a starting process of the transmission can be supplied to the cooling device (9) of the starting clutch after the distributing valve (8).

8. A hydraulic system according to claim 7, **characterized in that** the lubricant supply system (10) can be charged with hydraulic fluid via a bypass duct (15) branching off between the cooler (9) of the starting dutch and the distributing valve (8).

9. A hydraulic system according to daim 8, **characterized in that** the bypass duct (15) features a throttling device (27) and a check valve (26), with hydraulic fluid being deliverable to the lubricant supply system (10) from the cooler (9) of the starting clutch via the check valve (26) in the event of a negative pressure differential between the lubricant supply system (10) and the cooler (9) of the starting dutch.

10. A hydraulic system according to one of the claims 3 through 9, **characterized in that** with the starting dutch closed, the combined volumetric flow of the hydraulic fluid can be supplied to the lubricant supply system (10) via the distributing valve (8), with the cooler (9) of the starting clutch being chargeable with hydraulic fluid via the bypass duct (15).

11. A hydraulic system according to one of the claims 3 through 10, **characterized in that** control of the distributing valve (8) takes place in relation to a control pressure of the starting dutch, a spring (25) of the distributing valve (8) and of the control pressure of a shifting element of the transmission, which is preferably actuated for the realization of a starting ratio of the transmission.

12. A hydraulic system according to one of the claims 1 through 11, **characterized in that** an additional bypass line (18) is provided in the inlet to the cooler (7) for short-circuiting of the cooler (7), with an integrated thermoelement (20) whose hydraulic cross-section varies depending on the temperature of the hydraulic fluid.

## Revendications

1. Système hydraulique (1) d'une transmission équipée d'un embrayage de démarrage, qui est réalisé avec un circuit primaire (24) et un circuit secondaire (5), dans lequel un refroidissement (9) de l'embrayage de démarrage, un refroidisseur (7) pour un fluide hydraulique et une alimentation en milieu lubrifiant (10) de la transmission sont intégrés dans le circuit secondaire (5), et dans lequel le refroidisseur (7) est placé en amont du refroidissement (9) de l'embrayage de démarrage, **caractérisé en ce qu'**un débit volumique du fluide hydraulique traversant le refroidisseur (7) peut être limité au moyen d'un conduit de dérivation (11) pouvant être commandé, qui débouche dans le circuit secondaire (5) en aval du refroidisseur (7) et en amont du refroidissement (9) de l'embrayage de démarrage.

2. Système hydraulique selon la revendication 1, **caractérisé en ce que** le conduit de dérivation (11) peut être commandé au moyen d'une soupape combinée (6) de limitation de pression et de réduction de pression montée en amont du refroidisseur (7).

3. Système hydraulique selon la revendication 2, **caractérisé en ce que** le débit volumique du fluide hydraulique traversant le refroidisseur (7) et un débit volumique du fluide hydraulique passant par le conduit de dérivation (11) sont réunis en amont d'une soupape de distribution (8) placée en aval du refroidisseur (7).

4. Système hydraulique selon la revendication 3, **caractérisé en ce qu'**au moyen de la soupape de distribution (8), le débit volumique du fluide hydraulique réuni peut être réparti entre le refroidissement (9) de l'embrayage de démarrage et l'alimentation en milieu lubrifiant (10) de la transmission.

5. Système hydraulique selon l'une des revendications 1 à 4, **caractérisé en ce que** la soupape combinée (6) de limitation de pression et de réduction de pression est réalisée de manière à travailler comme soupape de réduction de pression lorsque le circuit secondaire (5) est saturé de fluide hydraulique et, sinon, comme soupape de limitation de la pression.

6. Système hydraulique selon l'une des revendications 2 à 5, **caractérisé en ce qu'**il se produit une répartition du débit volumique du fluide hydraulique du circuit secondaire (5) en direction du refroidisseur (7) au moyen de la soupape combinée (6) de limitation de pression et de limitation de pression jusqu'à ce qu'une valeur de pression pouvant être prédéterminée soit atteinte dans le refroidisseur (7) et que, lorsque la valeur de pression est atteinte, une partie du débit volumique du fluide hydraulique issu de la soupape combinée (6) de limitation de pression et de réduction de pression peut être envoyée en dérivation par rapport au refroidisseur (7) en passant par le conduit de dérivation (11).

7. Système hydraulique selon l'une des revendications 3 à 6, **caractérisé en ce que** la soupape de distribution (8) peut être commandée de telle manière que, dans une opération de démarrage de la transmission, le débit volumique de fluide hydraulique réuni peut être envoyé essentiellement au refroidissement (9) de l'embrayage de démarrage en aval de la soupape de distribution (8).

8. Système hydraulique selon la revendication 7, **caractérisé en ce que** l'alimentation en milieu lubrifiant (10) peut être alimentée en fluide hydraulique par l'intermédiaire d'un canal de dérivation (15) qui est piqué entre le refroidissement (9) de l'embrayage de démarrage et la soupape de distribution (8).

9. Système hydraulique selon la revendication 8, c a r a c t é r i s é en ce que le canal de dérivation (15) comprend un dispositif de soupape d'étranglement (27) et un dispositif de clapet anti-retour (26), du fluide hydraulique pouvant être envoyé du refroidissement (9) de l'embrayage de démarrage à l'alimentation en fluide lubrifiant (10) en passant par le clapet anti-retour (26) en présence d'un gradient de pression négatif entre l'alimentation en milieu lubrifiant (10) et le refroidissement (9) de l'embrayage de démarrage.

10. Système hydraulique selon l'une des revendications 3 à 9, **caractérisé en ce que**, lorsque l'embrayage de démarrage est fermé, le débit volumique de fluide hydraulique réuni peut être envoyé à l'alimentation en milieu lubrifiant (10) en passant par la soupape de distribution (8), le refroidissement (9) de l'embrayage de démarrage pouvant alors être alimenté en fluide hydraulique en passant par le canal de dérivation (15).

11. Système hydraulique selon l'une des revendications 3 à 10, **caractérisé en ce qu'**il se produit une commande de la soupape de distribution (8) en fonction d'une pression de commande de l'embrayage de démarrage, d'un ressort (25) de la soupape de distribution (8) et d'une pression de commande d'un élément de commande de la transmission qui est de préférence fermé pour donner un rapport de démarrage de la transmission.

12. Système hydraulique selon l'une des revendications 1 à 11, **caractérisé en ce que**, dans l'arrivée au refroidisseur (7), est prévu un autre conduit de dérivation (18) destiné à court-circuiter le refroidisseur (7) et dans lequel est intégré un thermo-diaphragme (20) dont la section hydraulique peut varier en fonction de la température du fluide hydraulique.
